(19) **Europäisches Patentamt**

**European Patent Office**

**Office européen des brevets**

(11) Numéro de publication : **0 473 476 A1**

## (12) DEMANDE DE BREVET EUROPEEN

(21) Numéro de dépôt : **91402126.6**

(22) Date de dépôt : **30.07.91**

(51) Int. Cl.$^5$ : **G06F 15/68, G06K 9/46**

(30) Priorité : **31.07.90 FR 9009742**

(43) Date de publication de la demande :
**04.03.92 Bulletin 92/10**

(84) Etats contractants désignés :
**BE DE GB IT NL SE**

(71) Demandeur : **THOMSON-TRT DEFENSE**
**88, rue Brillat-Savarin**
**F-75013 Paris (FR)**

(72) Inventeur : **Dufour, Jean-Yves**
**THOMSON-CSF, SCPI, Cédex 67**
**F-92045 Paris la Défense (FR)**
Inventeur : **Le Gall, Serge**
**THOMSON-CSF, SCPI, Cédex 67**
**F-92045 Paris la Défense (FR)**
Inventeur : **Waldburger, Hugues**
**THOMSON-CSF, SCPI, Cédex 67**
**F-92045 Paris la Défense (FR)**

(74) Mandataire : **Turlèque, Clotilde et al**
**THOMSON-CSF SCPI**
**F-92045 PARIS LA DEFENSE CEDEX 67 (FR)**

(54) **Procédé et dispositif de localisation en temps réel de contours rectilignes dans une image numérisée, notamment pour la reconnaissance de formes dans un traitement d'analyse de scène.**

(57)    Le dispositif comprend : des moyens d'analyse (10, 20 ; 10′, 20) approximant, pour chaque pixel, le gradient de la fonction de niveau de gris de l'image à l'endroit de ce pixel, ce gradient étant défini par un argument, représentatif d'une information de direction, et par une norme, représentative d'une information d'amplitude de la transition du niveau de gris dans cette direction ; des moyens discriminateurs (30) extrayant, parmi tous ces pixels, un sous-ensemble de pixels de contour, où chaque pixel de contour correspond à un maximum local de la fonction de niveau de gris dans la direction du gradient, ce maximum étant déterminé à partir de ladite information d'amplitude de transition ; des moyens de rebouchage (40) complétant ce sous-ensemble de pixels de contour par des pixels intercalaires de rebouchage en cas de discontinuité du contour dans un voisinage donné ; et des moyens comparateurs (50) effectuant, pour chaque pixel de contour ou de rebouchage, une comparaison du voisinage de ce pixel avec une série de configurations caractéristiques et désignant le pixel correspondant comme étant un pixel de contour rectiligne si et seulement si cette comparaison détermine une concordance du voisinage de ce pixel avec l'une de ces configurations caractéristiques.
La localisation des contours rectiligne peut ainsi être opérée en temps réel à la cadence vidéo.

EP 0 473 476 A1

FIG.6

La présente invention concerne un procédé et un dispositif pour localiser des contours rectilignes dans une image numérisée.

L'invention sera principalement décrite dans le cadre d'une application à l'analyse d'une scène dans laquelle on cherche à reconnaître des formes caractérisées par des contours rectilignes.

Il en est ainsi, par exemple, lorsque l'on cherche à localiser dans un environnement naturel des objets de fabrication humaine (route, ponts, bâtiments, voie ferrée, canaux, etc.)sur des images infrarouges délivrées par une caméra embarquée à bord d'un aéronef, de tels objets apparaissant en général à l'observation sous une forme polygonale. Comme application typique, on peut citer le recalage de navigation de l'aéronef.

Cette application à la reconnaissance de formes n'est cependant pas limitative de la présente invention, qui peut également être utilisée pour d'autres applications nécessitant l'extraction de points de contours rectilignes, par exemple des applications de stéréo-vision.

De façon générale, le traitement d'image est habituellement réalisé en trois étapes, à savoir :
– la recherche des points susceptibles d'appartenir à des contours rectilignes,
– la description analytique des segments formés par ces points, et
– le regroupement des divers segments ainsi détectés et analysés et appartenant à un même objet recherché.

L'invention concerne la première de ces étapes, à savoir la recherche préalable, dans l'image brute, de contours rectilignes et leur discrimination des autres points de l'image. Les résultats produits par le procédé du dispositif de l'invention serviront alors de base pour le traitement aval correspondant aux deux étapes suivantes.

Jusqu'à présent, les algorithmes de traitement et les architectures matérielles utilisés ne permettaient pas de réaliser en temps réel (c'est-à-dire à la cadence vidéo des images produites) une telle localisation des contours rectilignes, a fortiori le traitement complet de l'image constitué par les trois étapes mentionnées plus haut.

L'un des buts de l'invention est ainsi de proposer un traitement particulier, avec son architecture adaptée, permettant de réaliser en temps réel ce traitement de localisation des contours rectilignes.

On verra en particulier que les traitements effectués ont tous un caractère local (c'est-à-dire que l'analyse ou le traitement d'un pixel donné est effectué exclusivement en fonction des pixels situés autour de lui dans un voisinage limité, typiquement un voisinage compris entre 3 x 3 et 9 x 9).

Ceci permet d'aboutir à une relative simplicité du traitement à effectuer, à la différence des procédés de l'art antérieur qui nécessitaient généralement de considérer la globalité de l'image, obligeant ainsi à prévoir une architecture relativement complexe et coûteuse en circuits (mémoires de trame de grande capacité, important volume de calculs, etc.).

On notera également, lorsque l'on exposera en détail l'invention, le caractère adaptatif des traitements vis-à-vis du contenu de l'image ; cette caractéristique permet d'améliorer notablement la qualité de ces traitements.

À cet effet, la présente invention propose un procédé pour localiser des contours rectilignes dans une image numérisée, cette image étant formée d'une trame bidimensionnelle de pixels présentant chacun un niveau de gris déterminé, caractérisé en ce qu'il comprend les étapes consistant à :

(a) approximer, pour chaque pixel, le gradient de la fonction de niveau de gris de l'image à l'endroit de ce pixel, ce gradient étant défini par un argument, représentatif d'une information de direction, et par une norme, représentative d'une information d'amplitude de la transition du niveau de gris dans cette direction,

(b) extraire, parmi tous ces pixels, un sous-ensemble de pixels de contour, où chaque pixel de contour correspond à un maximum local de la fonction de niveau de gris dans la direction du gradient, ce maximum étant déterminé à partir de ladite information d'amplitude de transition,

(c) compléter ce sous-ensemble de pixels de contour par des pixels intercalaires de remplissage en cas de dis-continuité du contour correspondant dans un voisinage donné, et

(d) effectuer, pour chaque pixel de contour ou de rebouchage, une comparaison du voisinage de ce pixel avec une série de configurations caractéristiques et désigner le pixel correspondant comme étant un pixel de contour rectiligne si et seulement si cette comparaison détermine une concordance du voisinage de ce pixel avec l'une de ces configurations caractéristiques.

L'invention a également pour objet un dispositif constitué des moyens permettant de mettre en oeuvre ces fonctions, et dans lequel la localisation des contours rectilignes est alors avantageusement opérée en temps réel à la cadence vidéo.

Dans un mode de mise en oeuvre préférentiel, le voisinage considéré à l'étape (d) comprend deux couronnes carrées concentriques et non jointives définies autour du pixel de contour ou de rebouchage considéré, notamment la couronne 5 x 5 et la couronne 9 x 9 entourant ce pixel de contour ou de rebouchage.

De préférence, l'étape (a) d'approximation du gradient est effectuée par convolution de la fonction de niveau de gris de l'image avec le gradient d'une fonction de lissage Cette fonction de lissage peut notamment être une fonction gaussienne.

Avantageusement, après l'étape (a), on procède à un seuillage de la norme du gradient, la valeur de cette norme étant forcée à zéro si la norme est inférieure à un seuil donné ; ce seuillage est alors de préférence un seuillage adaptatif, le seuil respectif étant déterminé en fonction de la moyenne de la norme du gradient sur l'image précédente.

On va maintenant décrire un mode de mise en oeuvre de l'invention, en référence aux dessins annexés.

La figure 1 est un diagramme explicitant schématiquement l'enchaînement des différentes étapes du traitement du procédé de l'invention.

La figure 2 illustre l'une des sous-étapes de l'étape d'extraction du point de contour.

La figure 3 illustre l'étape de rebouchage des trous du contour.

La figure 4 montre les deux couronnes concentriques définissant le voisinage utilisé lors de l'étape de test de configuration.

La figure 5 montre une partie des masques correspondant aux différentes configurations caractérisant un contour rectiligne.

La figure 6 est un schéma par blocs illustrant une architecture préférentielle permettant de mettre en oeuvre en temps réel le traitement illustré schématiquement figure 1.

La figure 7 montre l'organisation interne du module référencé « filtre statistique » utilisé dans l'architecture de la figure 6.

*Présentation générale du traitement*

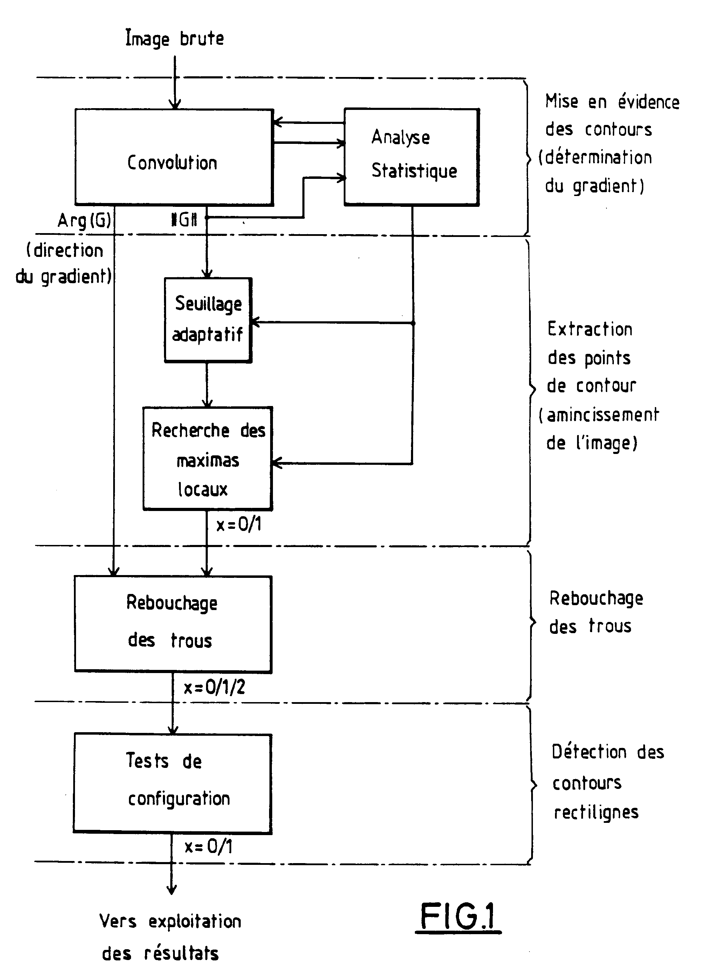

La figure 1 montre l'enchaînement des différentes étapes du procédé de l'invention, qui seront détaillées séparément par la suite.

Le procédé consiste à traiter une image brute formée d'une trame bidimensionnelle de pixels présentant chacun un niveau de gris déterminé, par exemple l'image délivrée par une caméra vidéo telle qu'une caméra infrarouge air-sol embarquée à bord d'un aéronef.

A partir de cette image brute, on va tout d'abord (étape référencée « mise en évidence des contours ») déterminer pour chaque pixel le gradient de la fonction de niveau de gris de l'image analysée (ou une approximation de ce gradient).

On va ainsi définir pour chaque pixel une valeur complexe (c'est-à-dire, sous une autre formulation, un vecteur) contenant pour chaque point deux informations, à savoir:
– une mesure de la transition locale des niveaux de gris au voisinage de ce point, représenté par la norme $||G||$ du vecteur gradient, et
– une estimation de la direction dans laquelle s'effectuer cette transition, représentée par l'argument $Arg(G)$ du vecteur gradient ; en cas de présence effective d'un contour au voisinage de ce point, cette direction de gradient sera donc perpendiculaire à la direction du contour.

L'étape suivante, référencée, « extraction des points de contour » consiste à ne conserver que les points correspondant à des maxima locaux de l'image formée par la norme $||G||$ du gradient, par exemple des maxima locaux dans un voisinage 3 x 3, en ne gardant ainsi que les « lignes de crête » de cette image.

On affecte alors en sortie une valeur binaire "0" ou "1 " à chaque pixel de l'image, selon que l'on a déterminé (de la manière que l'on indiquera plus bas) que celui-ci appartient ou n'appartient à un contour.

De plus, afin d'écarter les points de contour peu significatifs et d'atténuer l'influence du bruit, on procède à un seuillage de l'image-gradient en fonction de la norme des vecteurs, le vecteur gradient étant forcé à zéro si son amplitude est inférieure à un seuil donné.

Avantageusement, le seuil ainsi considéré est un seuil adaptatif, déterminé en fonction des normes des vecteurs de gradient, ces normes ayant été analysées statistiquement sur l'image précédente.

L'étape suivante, référencée « rebouchage des trous » consiste à éliminer les discontinuités que l'on peut rencontrer le long d'un contour donné.

Ce rebouchage présente certes l'inconvénient d'épaissir légèrement le contour, mais il est nécessaire pour effectuer efficacement à l'étape suivante le test de configuration, qui est extrêmement sensible à la présence de trous ou de petites irrégularités dans les contours extraits.

On obtiendra donc en sortie un contour continu formé d'une série de pixels auxquels on aura attribué la valeur "3" (pixel de contour originel) ou "1" (pixel de rebouchage, initialement nul), la valeur "0" correspondant à un pixel initialement nul et non rebouché (qui, donc, ne sera jamais considéré comme appartenant à un contour).

La quatrième et dernière étape du traitement, référencée « détection des contours rectilignes » consiste à effectuer un test de configuration ou *pattern matching* ayant pour objet de déterminer, pour chaque pixel appartenant à un contour, si ce pixel appartient à un contour rectiligne — auquel cas on lui affectera la valeur "1 " —ou non — auquel cas on lui affectera la valeur "0".

Ce test est réalisé, comme on l'expliquera plus loin, par la comparaison du voisinage du pixel considéré avec des voisinages de référence (également désignés « configurations » ou « masques »), chaque configuration de référence étant caractéristique d'un segment de direction donnée.

L'image obtenue en sortie après cette étape sera ainsi exclusivement constituée de pixels appartenant à des contours rectilignes.

On va maintenant décrire en détail chacune des différentes étapes du traitement.

*Mise en évidence des contours (détermination du gradient)*

Cette étape est réalisée en appliquant à la valeur (niveau de gris) de chaque pixel de l'image un opérateur dont la réponse en un point quelconque sera d'autant plus élevée que ce point sera situé sur une transition locale importante de la fonction de niveau de gris de l'image analysée.

Pour éviter des perturbations dues au bruit et aux irrégularités locales de l'image, on utilisera avantageusement un opérateur réalisant une approximation du gradient $G(x,y)$ de l'image $J(x,y)$ obtenue par convolution de la fonction image $I(x,y)$ avec une fonction de régularisation $W(x,y)$ à caractère statistique.

On peut utiliser à cet effet diverses fonctions de régularisation, gaussiennes ou non, gaussiennes isotropes ou non, gaussiennes à matrice de covariance diagonale ou non.

On peut par exemple utiliser la fonction gaussienne isotrope suivante :

$$W_\sigma(x,y) = 1/(2.\pi.\sigma). \exp [- (x^2 + y^2)/2.\sigma^2]$$

dont la fonction gradient sera donc:

$$\nabla W_\sigma = - 1/\sigma^2. (x,y) . W_\sigma(x,y)$$

La valeur du gradient recherchée est donnée par:

$$\underline{G}(x,y) = \nabla(W*I)(x,y)$$

On remarquera que cette dernière expression peut être également écrite sous la forme:

$$\underline{G}(x,y) = (\nabla W*I)(x,y)$$

On voit donc qu'il suffit de convoluer la fonction image I avec $\nabla W$ pour obtenir la valeur de gradient $\underline{G}$ recherchée.

En pratique, on choisira de préférence pour la fonction de régularisation une fonction $W(x,y)$ telle que les valeurs $||\nabla W(x,y)||$ prises par la norme de son gradient puissent être considérées comme négligeables en dehors d'un carré C centré à l'origine et de taille fixée. En d'autres termes, l'intégrale de la fonction

$||\nabla W(x,y)||$ calculée dans le carré C doit être proche de l'intégrale calculée sur tout le plan. $\Re^2$. Le noyau de convolution sera alors constitué par la restriction de la fonction vectorielle $\nabla W$ au carré C. La taille du carré C (typiquement 5 x 5 ou 9 x 9) dépendra du rapport signal/bruit des images traitées et de la nature des objets recherchés.

Le gradient ainsi calculé sera défini en un point quelconque par sa norme (mesure de l'ampleur de la transition du niveau de gris au point considéré) et par son argument (donnant une estimation de la direction dans laquelle s'effectue cette transition).

On notera que la norme du vecteur gradient peut être également assimilée à un coefficient de vraisemblance affecté à l'estimation de la direction du gradient au point traité. En d'autres termes, si la norme est très faible, la direction estimée sera très aléatoire, tandis que si, au contraire, elle est importante (transition très marquée), l'estimation de la direction sera certainement plus réaliste.

On notera également que la direction de gradient est définie dans l'intervalle [0,180°[ (le sens du vecteur n'est donc pas conservé).

*Extraction des points de contour*

Cette étape vise à déterminer la présence d'un contour par recherche des maxima locaux de la norme du gradient dans la direction de ce gradient — donc dans une direction perpendiculaire à la direction de ce contour, si le point considéré est un point de contour.

Le test est réalisé sur la base de la définition suivante (en supposant la fonction de niveau de gris continue): un point M de coordonnées $(x,y)$ est un point de contour si et seulement si la relation:

$$G(x,y) > G(x',y')$$

est vérifiée pour tout point $(x',y')$ appartenant à un voisinage donné du point $(x,y)$ et situé sur la droite supportant le vecteur $\underline{G}(x,y)$.

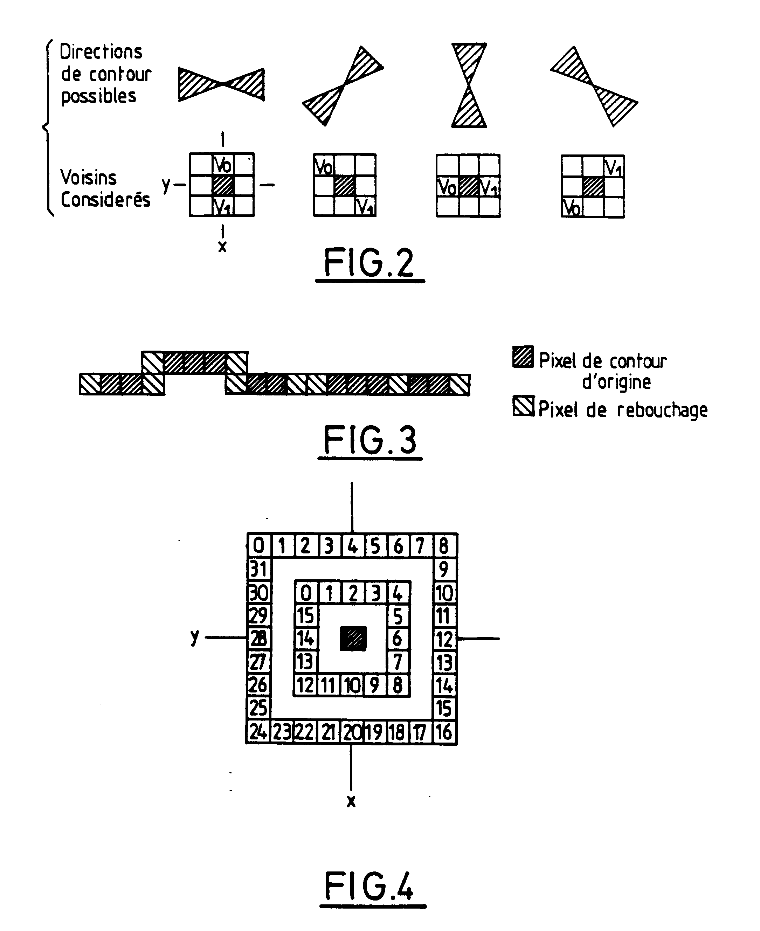

En pratique, comme illustré figure 2, on considérera un voisinage 3 x 3 et l'on décidera que le point $M(x,y)$ est un point de contour si et seulement si la relation:

$$G(x,y) \geq G(x_0,y_0) \text{ et } G(x,y) \geq G(x_1,y_1)$$

est vérifiée, $(x_0,y_0)$ et $(x_1,y_1)$ étant les coordonnées respectives des points voisins $V_0$ et $V_1$, situés dans un masque 3 x 3 centré au point M(x,y), symétriquement disposés par rapport à ce point M et présentant une orientation fonction de la direction du gradient $\underline{G}(x,y)$.

En ce qui concerne cette dernière condition, les quatre cas de figure possibles sont illustrés figure 2 en fonction de l'orientation du vecteur gradient.

Si le pixel (x,y) vérifie la condition indiquée ci-dessus, on lui affecte la valeur binaire "1", c'est-à-dire qu'on décide qu'il appartient à un contour ; dans le cas contraire, on lui affecte la valeur "0", c'est-à-dire que l'on considère qu'il n'appartient pas à un contour.

On notera que, pour écarter les points de contours peu significatifs et atténuer l'influence du bruit, on procède avant la recherche des maxima locaux à un seuillage adaptatif forçant à zéro la norme du vecteur gradient si celle-ci est inférieure à un seuil donné, très avantageusement un seuil asservi sur une valeur statistique obtenue à partir des modules des gradients des pixels de l'image précédente.

*Rebouchage des trous*

Le test de configuration étant extrêmement sensible à la présence de trous ou de petites irrégularités dans les contours extraits, il est nécessaire d'éliminer les discontinuités de ceux-ci par addition de pixels de complément à l'endroit de ces discontinuités ; on cherchera cependant à réduire à un minimum l'épaississement du contour résultant de cette addition de pixels.

Le principe de ce rebouchage, illustré schématiquement figure 3, consiste à prolonger les segments par un pixel supplémentaire de rebouchage ; ce rebouchage ne sera cependant effectué que si le pixel de rebouchage ajouté est adjacent à un pixel de contour d'origine.

En pratique, on procède en considérant un voisinage 3 x 3 du pixel $I_0$, ce voisinage V étant constitué des pixels $I_1$ à $I_8$ notés de la façon suivante :

$$V = \begin{matrix} I_1 & I_2 & I_3 \\ I_8 & I_0 & I_4 \\ I_7 & I_6 & I_5 \end{matrix}$$

On dira alors que le point $I_0$ doit être rebouché si et seulement si :

1°) son amplitude est nulle ET

2°) si :

l'un des pixels $I_1$ ou $I_5$ a une amplitude non nulle et une direction proche de 45° (direction que l'on définira comme étant une direction orientée à 45°, si l'on a choisi un pas de quantification de 22,5° comme dans l'exemple choisi), OU

l'un des pixels $I_4$ ou $I_8$ a une amplitude non nulle et une direction proche de 90° (direction que l'on définira comme étant une direction orientée à 90°, (90+22,5)° ou (90-22,5)°), OU

l'un des pixels $I_3$ ou $I_7$ a une amplitude non nulle et une direction proche de 135° (direction l'on définira comme étant une direction orientée à 135°), OU

l'un des pixels $I_2$ ou $I_6$ a une amplitude non nulle et une direction proche de 0° (direction l'on définira comme étant une direction orientée à 0°, 22,5° ou -22,5°).

On notera que, afin d'obtenir une partition non recouvrante de l'intervalle $[0,2\pi]$, on n'a affecté une tolérance de $\pm$ 22,5° qu'aux directions 0° et 90°.

Avantageusement, on peut définir ce jeu de conditions sous forme d'une équation logique unique.

A cet effet, on peut envisager un codage des pixels à traiter sous la forme suivante :

. C(x, y) = 0 si le pixel (x,y) n'est pas un point de contour, et

. $C(x, y) = 2^{(7-n)}$ si le pixel est un point de contour, n désignant l'entier compris entre 0 et 7 tel que la direction du gradient au point (x, y) (direction quantifiée par pas de 22,5°) soit égale à n x 22,5°.

En d'autres termes, si l'amplitude du pixel montre qu'il appartient à un contour (valeur non nulle), on représente ce pixel par un octet dans lequel on ne positionne qu'un bit et un seul, la position de ce bit dans l'octet étant représentative de la direction codée.

Il suffit alors de rechercher la concordance entre les valeurs correspondantes et un ensemble de quatre masques correspondant à chacune des quatre directions respectives considérées :

$MD_1$ =00100000:     masque des directions proches de 45°

MV =11000001 :     masque des directions proches de 0°

$MD_2$ =00000010:  masque des directions proches de 135°

MH =00011100:  masque des directions proches de 90°

En reprenant les notations de voisinages $I_0$ ... $I_8$ et en notant $C_i$ le codage du pixel $I_i$, la condition de rebouchage peut alors être représentée par l'expression logique suivante, où " $\wedge$ " représente un ET logique et " $\vee$ " un OU logique :

$$(C_0 = 0) \wedge \{[((C_1 \vee C_5) \wedge MD_1) \vee ((C_2 \vee C_6) \wedge MV) \vee ((C_3 \vee C_7) \wedge MD_2) \vee ((C_4 \vee C_8) \wedge MH)] \# 0\}$$

Si cette expression est VRAIE alors il y a lieu d'affecter au pixel correspondant une valeur correspondant à un pixel de rebouchage (valeur "1")

Dans le cas contraire, le rebouchage ne sera pas effectué ; le pixel gardera la valeur "0" s'il n'était pas un point de contour et prendra la valeur "3" ('11' en binaire) s'il s'agissait d'un point de contour.

*Détection des contours rectilignes (test de configuration)*

Cette étape consiste à tester, en chaque point M de coordonnées (x,y) appartenant à un contour, si les points de contour et les points de rebouchage présents dans un voisinage donné de ce point M(x,y) sont susceptibles de constituer des segments de droite passant par ce point M — auquel cas on décidera que ce point de contour M appartient à un contour rectiligne.

A cet effet, on compare le voisinage de chaque point M avec un certain nombre de « masques de voisinage » ou configurations de référence différents censés approximer un segment de contour rectiligne.

Si l'on détermine qu'il y a concordance effective du voisinage étudié avec l'une quelconque de ces configurations de référence, alors on décidera que l'on est effectivement en présence d'un contour rectiligne.

Le choix du voisinage considéré est une question importante.

Tout d'abord, il est bien évident que plus le voisinage sera étendu plus la réalisation matérielle des circuits sera rendue difficile, l'augmentation du nombre de paramètres à prendre en compte entraînant une complexité et un dimensionnement croissants des circuits.

Mais surtout, du seul point de vue de la qualité du traitement, si l'augmentation de la taille du masque se traduit par une meilleure précision en ce qui concerne l'estimation du caractère rectiligne des segments retenus (un voisinage étendu permet de mieux distinguer un contour effectivement rectiligne d'un contour légèrement curviligne), elle produit en revanche une érosion des segments détectés, car les extrémités du contour reconnu comme rectiligne seront supprimées sur une longueur correspondant à la moitié de la taille du masque de voisinage.

Il est donc nécessaire de trouver un compromis entre ces différentes considérations.

En pratique, on a constaté qu'un masque de voisinage de dimension 9 x 9 constituait dans la plupart des cas un choix satisfaisant.

En outre, pour limiter la complexité des calculs, on peut avantageusement, au lieu de retenir l'ensemble des 9 x 9 = 81 pixels constituant le voisinage du pixel considéré, limiter le masque à deux couronnes concentriques et non jointives, la première consistant en une couronne 5 x 5 d'un pixel de large, et la seconde en une couronne 9 x 9, également d'un pixel de large.

Ces deux couronnes ont été illustrées sur la figure 4, et l'on voit ainsi que l'on peut se contenter d'étudier un ensemble de 48 points seulement, soit près de la moitié seulement d'un voisinage complet de 81 pixels.

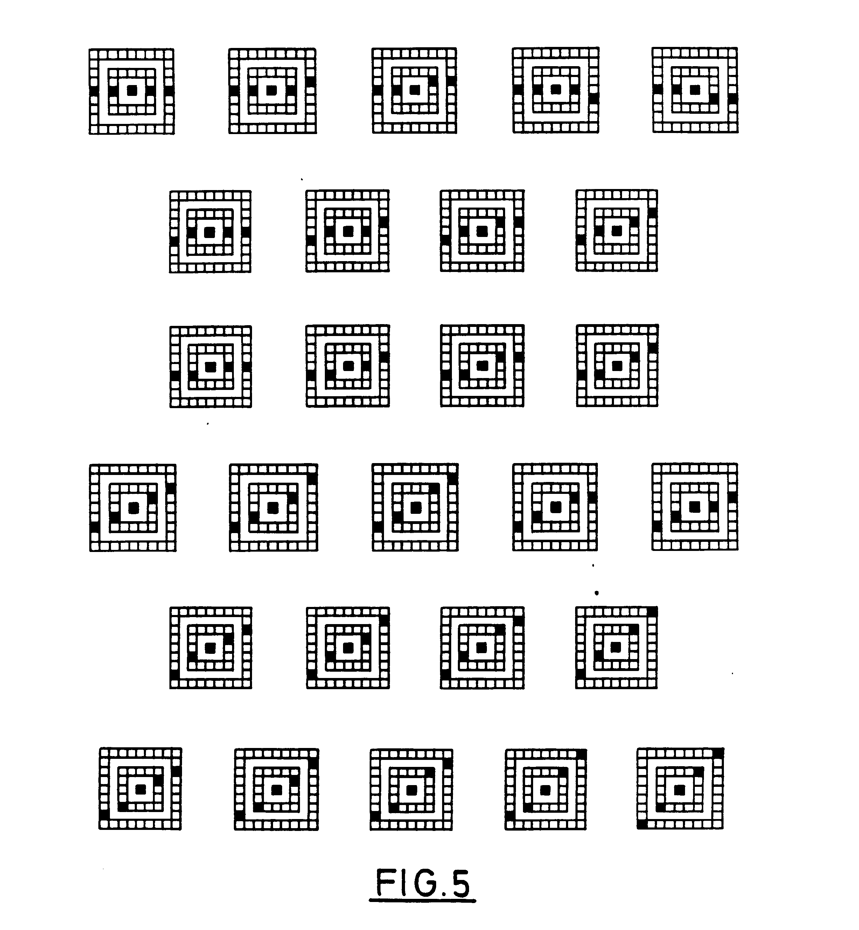

On a représenté sur la figure 5 une partie du jeu de masques de voisinage pour lesquels on considère qu'il y a effectivement contour rectiligne.

Le sous-ensemble de masques illustré figure 5 correspond à des directions de segment de contour formant un angle compris entre 0 et 45° par rapport à l'horizontale (avec les conventions de la figure).

Les autres masques de l'ensemble se déduisent simplement du sous-ensemble illustré figure 5 par des symétries d'axe vertical et horizontal et des rotations d'un quart de tour, afin de couvrir toutes les directions comprises entre 45° et 360°.

On obtient ainsi 102 masques différents. Si le voisinage constitué par les 48 points des deux couronnes 5 x 5 et 9 x 9 du pixel considéré concorde avec l'une quelconque de ces 102 configurations, on considérera alors que le pixel central est un pixel de contour rectiligne.

Pour simplifier le calcul, il est utile de réunir l'ensemble de ces configurations sous la forme d'un ensemble restreint d'équations logiques.

Ainsi, le test de l'une (i) des n configurations peut être réalisé par une équation logique de la forme :

$$L(i) = B_0 \wedge B_1(i) \wedge B_2(i) \wedge B_3(i) \wedge B_4(i),$$

où:

. $B_k(i)$ est VRAI si et seulement si le pixel situé dans le $k^{ième}$ élément de la configuration est non nul, et

. $B_0$ est VRAI si et seulement si le pixel traité est un point de contour.

Le résultat du test est donné par un OU logique sur les résultats de tous les tests L(i) :

$$L = \bigvee_{i=1\ldots n} L(i)$$

Notons CE (Couronne Externe) et CI (Couronne Interne) les vecteurs logiques définis de la manière suivante:

. CE[i] = 1 si et seulement si le $i^{ème}$ élément de la couronne externe est non nul,

. CI[i] = 1 si et seulement si, pour i pair, le $(i/2)^{ème}$ élément de la couronne interne est non nul, et

. CI[i] = 1 si et seulement si, pour i impair, le $((i-1)/2)^{ème}$ ou le $((i+1)/2)^{ème}$ élément de la couronne interne est non nul.

Par ailleurs, si A et B désignent deux vecteurs logiques, notons :

. $\overline{A}[i] = A[i-1] \vee A[i] \vee A[i+1]$,

. $\overline{(A \wedge B)}[i] = A[i] \wedge B[i]$,

. $\bigvee A = A[0] \vee A[1] \vee \ldots \vee A[n-1]$,

. $A^+ = (A[n-1], A[0] \ldots A[n/2-1]$ (c'est-à-dire la moitié supérieure des composantes), et

. $A^- = (A[n/2-1], A[n/2] \ldots A[n-1]$ (c'est-à-dire la moitié inférieure des composantes).

Le test peut alors être mis en facteur sous la forme:

$$L = B_0 \wedge \bigvee ((\overline{CE} \wedge \overline{CI})^+ \wedge \overline{(\overline{CE} \wedge \overline{CI})^-})$$

En d'autres termes, on examine si l'on trouve deux éléments voisins situés respectivement sur la couronne interne et la couronne externe (test $(\overline{CE} \wedge \overline{CI})^+$) puis si, dans la direction opposée, il existe également deux éléments voisins situés respectivement sur la couronne interne et la couronne externe (test $\overline{(CE \wedge CI)^-}$), et l'on teste enfin si ces deux demi-segments sont situés en vis-à-vis (test global $(\overline{CE} \wedge \overline{CI})^+ \wedge \overline{(CE \wedge CI)^-}$).

Ce test global est effectué pour chacun des n points du voisinage considéré (opérateur général ou $\bigvee$).

Si ce OU global est VRAI et que le pixel central est un point de contour ($B_0$ VRAI), alors le contour auquel appartient ce pixel est un contour rectiligne.

Une fois que l'on a effectué ce traitement pour tous les pixels de l'image, le processus est achevé, l'image brute originale étant alors réduite aux seuls contours rectilignes ainsi discriminés.

*Architecture de mise en oeuvre en temps réel du traitement*

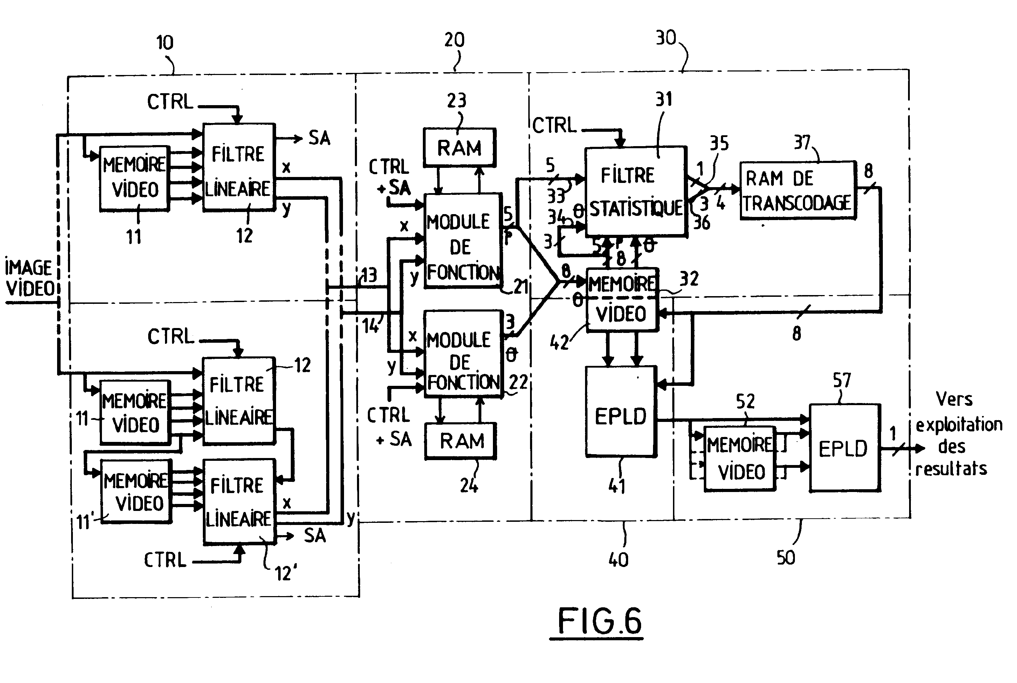

On va maintenant décrire, en référence au schéma par blocs de la figure 6, une architecture de circuits propre à réaliser en temps réel les traitements du processus exposés ci-dessus.

En effet, les algorithmes de traitement exposés plus haut ont été choisis en vue de permettre ce traitement en temps réel, compte tenu des cadences très élevées, qui peuvent atteindre jusqu'à 20 MHz pour la cadence des pixels.

Le premier étage 10 ou 10′ reçoit l'image brute (c'est-à-dire l'ensemble des pixels d'une trame avec, pour chacun d'entre eux, un niveau de gris propre) et effectue l'approximation du gradient par une opération de convolution, comme on l'a indiqué plus haut.

Sur la figure 6, on a représenté côte à côte pour cet étage deux solutions possibles (blocs 10 et 10′), correspondant respectivement à une taille de noyaux 5 x 5 et 9 x 9. Bien entendu, un seul des deux circuits sera utilisé, le choix du circuit dépendant en fait de la taille de noyau choisie, fonction de l'image étudiée (rapport signal/ bruit et nature des objets recherchés).

Cet étage, dans l'une ou l'autre de ses formes, est réalisé à partir de deux circuits 11 (ou 11 et 11′) et 12 (ou 12 et 12′) qui sont des circuits universels VLSI développés dans le cadre du programme européen EURÊKA (projet « MIP » n° EU34: *Modular Image Processing*).

La mémoire vidéo utilisée par l'invention est le circuit MIP *Video Memory*, qui est un circuit mémoire destiné à l'agencement des données pour le circuit MIP *Linear Filter* (filtre linéaire 12) et également pour le circuit MIP *Sorting Filter* (filtre statistique 31, utilisé plus loin dans l'architecture).

Ce circuit *Video Memory* permet de mémoriser quatre lignes vidéo de 1024 pixels chacune (taille maximale), chaque pixel pouvant être codé sur 8 bits de niveau de gris. Il peut ainsi délivrer, à la cadence vidéo, une colonne de cinq pixels (les quatre pixels mémorisés plus le pixel courant) à un filtre linéaire ou un filtre statistique placé en aval.

Cette mémoire peut également être scindée en deux sous-mémoires alimentées séparément par deux signaux vidéo distincts, chaque demi-mémoire mémorisant alors deux lignes vidéo pour chacun des signaux.

La longueur des lignes est programmable par commande externe, avec une taille maximale de 1024 pixels.

Quant au circuit MIP *Linear Filter* (filtre linéaire), il s'agit d'un circuit dédié permettant d'effectuer la convolution d'une image E avec un masque K, conformément à la relation:

$$C(n,m) = \Sigma\, E(n + l, m + j)\,.\, K(i,j)$$

Ce circuit présente les caractéristiques fonctionnelles suivantes :

– voisinage de traitement: 5 x 10,

– deux modes de fonctionnement possibles : mode « réel » (convolution unique) et mode « complexe » (deux convolutions simultanées avec deux masques différents),

– format vidéo programmable (retour ligne, retour trame),

– cadence vidéo maximale: 20 MHz,

– entrée : 5 pixels de 8 bits,

– sortie : 16 bits (en mode réel) ou 24 bits (2 x 12 bits en mode complexe),

– possibilité de post-traitements intégrés :

. ajustement des sorties par une transformation du type:

$$S(n,m) = a\,.\,C(n,m)\,.\,2^b + c,$$

avec a, b et c programmables,

. seuillage : les valeurs inférieures à un seuil donné peuvent être forcées à zéro, les valeurs supérieures étant conservées en l'état, ou forcées à 1 selon le mode de seuillage,

. calcul d'histogramme, et

. recherche du minimum et du maximum sur les résultats.

Dans l'utilisation particulière de l'invention, le filtre linéaire 12 est associé à la mémoire vidéo 11 pour effectuer la convolution recherchée. CTRL symbolise les différentes commandes de paramétrage appliquées au filtre linéaire : coefficients du masque, programmation du circuit, valeurs de gain et d'offset pour l'ajustement.

Dans le cas d'un voisinage 9 x 9 (circuit 10′), on associe en cascade deux filtres linéaires 12, 12′, ces filtres étant associés à deux mémoires vidéo 11, 11′ également associées en cascade.

L'étage statistique incorporé au filtre linéaire permet d'analyser les résultats délivrés en sortie par celui-ci.

En l'espèce, il s'agit d'évaluer la statistique du module du gradient de la fonction de niveau de gris de l'image. Pour cela, on calcule en temps réel un histogramme à 16 niveaux sur le maximum des valeurs absolues de la partie réelle et de la partie imaginaire (le filtre linéaire opérant en mode complexe).

Cette estimation, ainsi que les valeurs maximale et minimale de cette grandeur, vont permettre d'asservir le seuillage sur le gradient ainsi que la binarisation en sortie du module d'amincissement (voir plus loin).

Les sorties délivrées par le filtre linéaire 12 ou 12′sur les lignes 13 et 14 sont sous forme complexe cartésienne.

Pour pouvoir exploiter cette information, il est nécessaire d'effectuer, pixel après pixel, un certain nombre d'opérations:

– tout d'abord, une conversion de cartésien (x,y) en polaire $(\rho,\theta)$, incluant une extension de dynamique,

– un seuillage, pour éliminer une partie du bruit sur le résultat de l'estimation du gradient (on a vu en effet plus haut que, si le module du gradient était faible, l'estimation de direction était entachée d'une forte incertitude ; il est donc nécessaire d'éliminer les valeurs non significatives en les forçant à zéro) ; le seuil adaptatif SA sera calculé à partir des données statistiques fournies par le filtre linéaire, et

– une quantification permettant d'optimiser la répartition des valeurs de l'angle $\theta$ sur trois bits (cette étape conditionne l'efficacité de l'amincissement opéré plus loin).

Ces traitements, qui impliquent des opérations non linéaires, peuvent être effectuées intégralement par deux circuits MIP du type *Function Module* (module de fonction) 21 et 22, associés à des RAMs respectives 23, 24.

Plus précisément, le module MIP *Function Module* est destiné à approximer à la cadence vidéo toute fonction continue à deux variables. À cet effet, la RAM qui lui est associée contient les valeurs de la fonction sur un échantillonnage de points $X_i, Y_j$, avec $0 \leqq i \leqq I$ et $0 \leqq j \leqq J$. Le module de fonction détermine pour (X,Y) la valeur de la fonction par une interpolation bilinéaire ou linéaire.

Ses caractéristiques sont les suivantes :

– stockage des valeurs de la fonction sur une grille 128 x 128,

– cadence vidéo maximale: 20 MHz,

– entrées: 2 x 12 bits,

– sortie: 12 bits.

En l'espèce, l'étage 20 comporte un premier module de fonction 21 recevant en entrée les coordonnées x et y, chacune sur 12 bits, et délivrant en sortie la valeur $\rho$ correspondant à la norme de gradient $\|G\|$ de la figure 1.

Un second module de fonction 22 reçoit les mêmes entrées et délivre en sortie la valeur $\theta$ correspondant

à l'argument de gradient Arg(G) de la figure 1.

Seules les parties hautes des sorties seront prises en compte, à savoir 5 bits pour la norme $\rho$ et 3 bits pour l'argument $\theta$.

Les signaux de commande CTRL permettent en particulier de charger dans les RAMs respectives 23, 24 les valeurs des fonctions non linéaires voulues. Ils incluent le seuil adaptatif SA délivré par le filtre linéaire 12 ou 12'de l'étage 10 précédent.

Le seuillage adaptatif peut être réalisé en utilisant le fait que le module de fonction permet d'avoir accès à plusieurs fonctions par une sélection en entrée (typiquement, 16 fonctions). On peut par exemple retenir 8 types de conversion différentes et quantifier l'espace des seuils à partir de ces fonctions.

L'étage suivant 30 a pour fonction de réaliser l'extraction des points de contour (amincissement de l'image à ses seuls contours). Comme on l'a expliqué plus haut, notamment en référence à la figure 2, le voisinage de traitement est ici un voisinage 3 x 3, et l'opération de type statistique dépend de l'orientation du gradient.

Cette opération d'extraction des points de contours est effectuée à l'aide d'un autre circuit MIP, qui est le *Sorting Filter* (filtre statistique) 31, combiné à une mémoire vidéo 32 de deux lignes (pour disposer du voisinage 3 x 3) réalisée ici sous forme d'une demi-mémoire d'un composant MIP *Video Memory.*

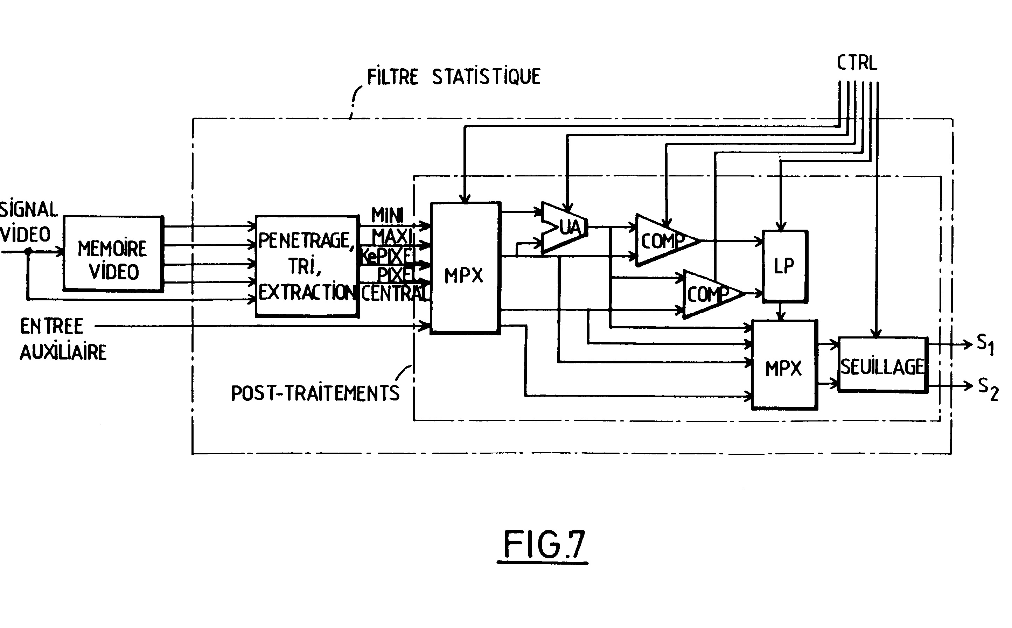

La structure du composant MIP *Sorting Filter* est illustrée plus en détail figure 7.

Ce circuit reçoit en entrée les lignes mémorisées dans une mémoire vidéo de quatre lignes ; on va donc disposer en entrée d'un voisinage 5 x 5 constitué par la ligne courante (appliquée directement en entrée) et les quatre lignes immédiatement précédentes (chargées dans la mémoire vidéo).

Ce voisinage 5 x 5 est traité par un circuit de fenêtrage, tri et extraction qui va délivrer en sortie, outre la valeur du pixel central, la valeur minimale, la valeur maximale et la $k^{ième}$ valeur (k étant un paramètre programmable) des pixels de ce voisinage.

À ces quatre signaux de résultat est adjoint un signal d'entrée supplémentaire. Ces cinq signaux sont redistribués au travers d'un multiplexeur pour alimenter, en fonction des commandes CTRL, une unité arithmétique simplifiée UA, deux comparateurs COMP et un second multiplexeur MPX, lui-même contrôlé par une logique programmable elle-même alimentée par les valeurs de sortie des comparateurs.

Les caractéristiques de ce circuit MIP *Sorting Filter* sont les suivantes :
– cadence vidéo maximale: 20 MHz,
– 8 masques interchangeables à la cadence vidéo,
– entrée : 5 entrées de 8 bits plus une entrée supplémentaire sur 8 bits pour la cascade et une autre entrée supplémentaire 8 bits pour les post-traitements,
– sorties : deux sorties de 8 bits ($S_1$ et $S_2$), plus une sortie auxiliaire de 3 bits permettant de récupérer le signal utilisé pour la sélection de masque (par exemple la direction de gradient dans le cas de l'amincissement de contour), ce signal ayant entretemps été retardé de façon à se trouver synchrone avec les sorties $S_1$ et $S_2$.

En pratique, dans le cas du circuit de la figure 6, le filtre statistique 31 reçoit en entrée la norme du gradient du pixel courant (ligne 33), et la norme et l'argument du gradient des pixels des lignes adjacentes, l'argument $\theta$ permettant notamment (ligne 34) de sélectionner en temps réel,en fonction de cette valeur d'argument, l'un des quatre masques illustrés figure 2.

Les pixels du voisinage pointés par le masque ainsi sélectionné sont triés par le circuit, qui en extrait les trois pixels minimum, $k^{ième}$ et maximum. Le post-processeur du filtre statistique permet alors d'exécuter les formules développées plus haut et visant à rechercher le maximum local. La sortie du résultat (ligne 35) est binaire (le pixel central est ou non un point de contour), et le circuit délivre également sur trois bits (ligne 36) l'angle $\theta$ ayant servi à sélectionner le masque, donnant ainsi 4 bits en sortie.

Un circuit de transcodage 37, qui peut être constitué d'une simple mémoire RAM rapide, convertit ces 4 bits en un format sur 8 bits codant la direction du gradient en fonction de la position du bit dans l'octet (voir plus haut les explications relatives au codage des pixels $I_1$ à $I_8$ en vue du rebouchage).

Les deux opérations restantes, à savoir le rebouchage des trous et le test de configuration, nécessitent un nombre important d'opérations logiques à réaliser à cadence rapide.

Pour les mettre en oeuvre, on a choisi de recourir à des composants logiques programmables de type EPLD (*Erasable Programmable Logical Devices*). Ces composants sont constitués, de manière en elle-même bien connue, de portes logiques OU et ET groupées en cellules terminées par des registres de mémorisation. Au moyen d'un outil de développement adapté, l'utilisateur programme chaque cellule ainsi que les connexions entre les cellules de manière à matérialiser l'expression logique voulue correspondante.

Dans le cas présent, on réalise le rebouchage des trous dans un étage 40 comprenant un composant EPLD 41, par exemple un *EP900* commercialisé par ALTERA, qui est un circuit constitué de 24 macrocellules, avec 12 entrées et 24 sorties.

Du fait que l'on travaille sur un voisinage 3 x 3, il suffit d'utiliser une demi-mémoire vidéo 42 (mémorisation de deux lignes antérieures). Le composant EPLD est programmé de façon à réaliser la fonction logique indiquée plus haut au paragraphe correspondant à la fonction de rebouchage des trous.

Le test final de configuration est effectué par un étage 50 comprenant un autre composant EPLD (par exemple un composant *EPM5128* de ALTERA comprenant 128 macrocellules, associé à une mémoire vidéo 52. En effet, comme on l'a vu plus haut, le test de configuration agit sur un voisinage 9 x 9 avec chaque pixel codé sur 2 bits (x ="0", "1" ou "2"). Il est donc nécessaire d'utiliser un composant MIP *Video Memory* complet).

Ici encore, le composant EPLD est programmé pour réaliser le test de configuration explicité plus haut.

## Revendications

1. Un procédé pour localiser des contours rectilignes dans une image numérisée, notamment pour la reconnaissance de formes dans un traitement d'analyse de scène, cette image étant formée d'une trame bidimensionnelle de pixels présentant chacun un niveau de gris déterminé,

   procédé caractérisé en ce qu'il comprend les étapes consistant à :

   (a) approximer, pour chaque pixel, le gradient de la fonction de niveau de gris de l'image à l'endroit de ce pixel, ce gradient étant défini par un argument (Arg(G)), représentatif d'une information de direction, et par une norme ($\|G\|$), représentative d'une information d'amplitude de la transition du niveau de gris dans cette direction,

   b) extraire, parmi tous ces pixels, un sous-ensemble de pixels de contour, où chaque pixel de contour correspond à un maximum local de la fonction de niveau de gris dans la direction du gradient, ce maximum étant déterminé à partir de ladite information d'amplitude de transition,

   (c) compléter ce sous-ensemble de pixels de contour par des pixels intercalaires de rebouchage en cas de discontinuité du contour correspondant dans un voisinage donné, et

   (d) effectuer, pour chaque pixel de contour ou de rebouchage, une comparaison du voisinage de ce pixel avec une série de configurations caractéristiques et désigner le pixel correspondant comme étant un pixel de contour rectiligne si et seulement si cette comparaison détermine une concordance du voisinage de ce pixel avec l'une de ces configurations caractéristiques.

2. Le procédé de la revendication 1, dans lequel ledit voisinage considéré à l'étape (d) comprend deux couronnes carrées concentriques et non jointives définies autour du pixel de contour ou de rebouchage considéré.

3. Le procédé de la revendication 2, dans lequel les deux couronnes carrées concentriques et non jointives sont constituées par la couronne 5 x 5 et par la couronne 9 x 9 entourant le pixel de contour ou de rebouchage considéré.

4. Le procédé de la revendication 1, dans lequel l'étape (a) d'approximation du gradient est effectuée par convolution de la fonction de niveau de gris de l'image avec le gradient d'une fonction de régularisation.

5. Le procédé de la revendication 4, dans lequel ladite fonction de régularisation est une dérivée de fonction gaussienne.

6. Le procédé de la revendication 1, dans lequel, après l'étape (a), on procède à un seuillage de la norme du gradient, la valeur de cette norme étant forcée à zéro si la norme est inférieure à un seuil donné.

7. Le procédé de la revendication 6, dans lequel ledit seuillage est un seuillage adaptatif, le seuil respectif étant déterminé en fonction de la moyenne de la norme du gradient sur l'image précédente.

8. Un dispositif de localisation de contours rectilignes dans une image numérisée, notamment pour la reconnaissance de formes dans un traitement d'analyse de scène, cette image étant formée d'une trame bidimensionnelle de pixels présentant chacun un niveau de gris déterminé, dispositif caractérisé en ce qu'il comprend:

   – des moyens d'analyse (10, 20 ; 10′, 20) approximant, pour chaque pixel, le gradient de la fonction de niveau de gris de l'image à l'endroit de ce pixel, ce gradient étant défini par un argument, représentatif d'une information de direction, et par une norme, représentative d'une information d'amplitude de la transition du niveau de gris dans cette direction,

   – des moyens discriminateurs (30) extrayant, parmi tous ces pixels, un sous-ensemble de pixels de contour, où chaque pixel de contour correspond à un maximum local de la fonction de niveau de gris dans la direction du gradient, ce maximum étant déterminé à partir de ladite information d'amplitude de transition,

– des moyens de rebouchage (40) complétant ce sous-ensemble de pixels de contour par des pixels intercalaires de rebouchage en cas de discontinuité du contour dans un voisinage donné, et

– des moyens comparateurs (50) effectuant, pour chaque pixel de contour ou de rebouchage, une comparaison du voisinage de ce pixel avec une série de configurations caractéristiques et désignant le pixel correspondant comme étant un pixel de contour rectiligne si et seulement si cette comparaison détermine une concordance du voisinage de ce pixel avec l'une de ces configurations caractéristiques.

9.  Le dispositif de la revendication 8, dans lequel la localisation des contours rectilignes est opérée en temps réel à la cadence vidéo.

Image brute

| Convolution | → → | Analyse Statistique | } Mise en évidence des contours (détermination du gradient) |

Arg(G)    ‖G‖

(direction du gradient)

Seuillage adaptatif

Recherche des maximas locaux

x = 0/1

} Extraction des points de contour (amincissement de l'image)

Rebouchage des trous

x = 0/1/2

} Rebouchage des trous

Tests de configuration

x = 0/1

} Détection des contours rectilignes

Vers exploitation des résultats

## FIG.1

Directions
de contour
possibles

Voisins
Considerés

y

x

V₀

V₁

V₀

V₁

V₀

V₁

V₀

V₁

## FIG.2

Pixel de contour
d'origine

Pixel de rebouchage

## FIG.3

| 0 | 1 | 2 | 3 | 4 | 5 | 6 | 7 | 8 |
|---|---|---|---|---|---|---|---|---|
| 31 | | | | | | | | 9 |
| 30 | | 0 | 1 | 2 | 3 | 4 | | 10 |
| 29 | | 15 | | | | 5 | | 11 |
| 28 | | 14 | | | | 6 | | 12 |
| 27 | | 13 | | | | 7 | | 13 |
| 26 | | 12 | 11 | 10 | 9 | 8 | | 14 |
| 25 | | | | | | | | 15 |
| 24 | 23 | 22 | 21 | 20 | 19 | 18 | 17 | 16 |

y

x

## FIG.4

FIG.5

FIG.6

EP 0 473 476 A1

FIG.7

EP 0 473 476 A1

**Office européen des brevets**

# RAPPORT DE RECHERCHE EUROPEENNE

Numero de la demande

EP    91 40 2126

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | WO-A-8 703 118 (NCR CORPORATION) 21 Mai 1987<br>* abrégé *<br>* page 1, ligne 24 - page 2, ligne 33 *<br>* page 5, ligne 20 - page 6 *<br>* page 27 - page 30; figures 2,3 *<br>--- | 1,8,9 | G06F15/68<br>G06K9/46 |
| A | EP-A-0 279 297 (FUJITSU LTD) 24 Août 1988<br>* colonne 2, ligne 15 - ligne 39 *<br>--- | 1 | |
| Y | EP-A-0 229 543 (THOMSON-CGR) 22 Juillet 1987<br>* colonne 1, ligne 38 - ligne 54 *<br>* colonne 2, ligne 35 - ligne 45 *<br>* colonne 3, ligne 5 - ligne 11 *<br>--- | 1,8,9 | |
| A | US-A-4 910 786 (PAUL H. EICHEL) 20 Mars 1990<br>* abrégé *<br><br>----- | 4,5 | |

| | DOMAINES TECHNIQUES RECHERCHES (Int. Cl.5) |
|---|---|
| | G06F<br>G06K |

Le présent rapport a été établi pour toutes les revendications

| Lieu de la recherche | Date d'achèvement de la recherche | Examinateur |
|---|---|---|
| LA HAYE | 08 NOVEMBRE 1991 | CHATEAU J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)